# FASCICULE DE BREVET EUROPEEN

(11) **EP 4 602 402 B1**
(45) Date de publication et mention de la délivrance du brevet: **04.11.2026**
(21) Numéro de dépôt: 23793419.5
(22) Date de dépôt: 13.09.2023
(51) Int. Cl.: G01V 1/30, G01V 1/28

(54) **PROCÉDÉ ET DISPOSITIF DE SURVEILLANCE DU SOUS-SOL TERRESTRE SOUS UNE ZONE CIBLE**
VERFAHREN UND VORRICHTUNG ZUR ÜBERWACHUNG DES UNTERGRUNDES UNTER EINEM ZIELBEREICH
METHOD AND DEVICE FOR MONITORING THE SUBSOIL OF THE EARTH UNDER A TARGET ZONE

(30) Priorité: 12.10.2022 FR 2210473
(43) Date de publication de la demande: 20.08.2025
(73) Titulaire: SERCEL, 44470 Carquefou (FR)
(72) Inventeur: BARDAINNE, Thomas, 44470 Carquefou (FR); ALLEMAND, Thibaut, 44470 Carquefou (FR)
(74) Mandataire: Ipsilon
(86) Numéro de dépôt international: PCT/FR2023/051395
(87) Numéro de publication internationale: WO 2024/079404

(56) Documents cités:
- US-A1- 2021 302 609
- LIU YUJIN ET AL: "On the Retrievability of Seismic Waves From High-Speed-Train-Induced Vibrations Using Seismic Interferometry", IEEE GEOSCIENCE AND REMOTE SENSING LETTERS, IEEE, USA, vol. 19, 25 January 2021 (2021-01-25), pages 1 - 5, XP011895688, ISSN: 1545-598X, [retrieved on 20211229], DOI: 10.1109/LGRS.2021.3050205
- DIEGO A. QUIROS ET AL: "Seismic interferometry of railroad induced ground motions: body and surface wave imaging", GEOPHYSICAL JOURNAL INTERNATIONAL., vol. 205, no. 1, 19 February 2016 (2016-02-19), GB, pages 301 - 313, XP055581833, ISSN: 0956-540X, DOI: 10.1093/gji/ggw033
- SHAO JIE ET AL: "Near-Surface Characterization Using High-Speed Train Seismic Data Recorded by a Distributed Acoustic Sensing Array", IEEE TRANSACTIONS ON GEOSCIENCE AND REMOTE SENSING, IEEE, USA, vol. 60, 24 February 2022 (2022-02-24), pages 1 - 11, XP011905520, ISSN: 0196-2892, [retrieved on 20220224], DOI: 10.1109/TGRS.2022.3153831
- SHAN DOU ET AL: "Distributed Acoustic Sensing for Seismic Monitoring of The Near Surface: A Traffic-Noise Interferometry Case Study", SCIENTIFIC REPORTS, vol. 7, no. 1, 14 September 2017 (2017-09-14), pages 1 - 12, XP055581491, DOI: 10.1038/s41598-017-11986-4

## Description

La présente invention se rapporte à un procédé et un dispositif de surveillance du sous-sol terrestre sous une zone cible.

Elle appartient au domaine de l'analyse sismique et trouve application notamment dans les activités de surveillance du sous-sol terrestre et de détection d'anomalies dans ce dernier, comme la détection de cavités sous des voies ferrées, des rues, des routes ou encore des aéroports.

Afin de garantir la sécurité des utilisateurs de ces infrastructures terrestres, il est en effet important de procéder à une surveillance instantanée, temporaire ou permanente, du sous-sol, afin de détecter toute éventuelle anomalie souterraine telle qu'une cavité, susceptible de fragiliser les ouvrages construits en surface.

On connaît par le document WO 2020/021177 A1 une méthode consistant à placer des capteurs sismiques à proximité de voies ferrées et à enregistrer les ondes sismiques engendrées par le passage des trains, ce qui permet de donner une image du sous-sol.

Comme on ne connaît pas la signature de la source sismique, à savoir, l'excitation du sol par le passage du train, les données sont traitées en mode passif par corrélations croisées, de même qu'en sismologie globale.

Si cette méthode connue donne de bons résultats, elle présente toutefois l'inconvénient que la résolution spatiale est directement liée à l'écartement entre capteurs sismiques, qui définit la résolution maximale. Par conséquent, pour obtenir des images d'anomalies de la taille du mètre, il est nécessaire de déployer des capteurs tous les mètres. Cela cause de fortes limitations opérationnelles et financières.

La présente invention a pour but de remédier aux inconvénients précités de l'art antérieur.

Dans ce but, la présente invention propose un procédé de surveillance du sous-sol terrestre sous une zone cible comportant une voie de circulation, remarquable en ce qu'il comporte des étapes suivant lesquelles :
on place dans la zone cible au moins un capteur à proximité de la voie de circulation, munie à intervalles connus d'une pluralité d'éléments transversaux par rapport à la voie de circulation ;
on enregistre des ondes sismiques provenant d'une pluralité de sources primaires de signal sismique primaire identifiées et mobiles le long de la voie de circulation, les sources primaires étant indépendantes et différentes les unes des autres ;
pour chaque source primaire de la pluralité de sources primaires, on décompose le signal sismique primaire engendré par la source primaire en une somme de plusieurs signaux sismiques secondaires engendrés par chacun des éléments transversaux situés dans la zone cible ;
on reconstruit par déconvolution un ensemble de sismogrammes de la zone cible à partir des signaux sismiques secondaires ;
on engendre une image du sous-sol sous la zone cible à partir de l'ensemble de sismogrammes.

Ainsi, la présente invention permet une imagerie à haute résolution spatiale, notamment inférieure au mètre, avec un réseau de capteurs extrêmement lâche.

Dans un mode particulier de réalisation, lors de l'étape de décomposition du signal sismique primaire, la somme de signaux sismiques secondaires se limite aux signaux secondaires engendrés par les éléments transversaux situés à une distance de l'au moins un capteur inférieure à 200 m, voire 100 m selon la densité des éléments transversaux.

Cela permet de réduire le temps de calcul en ne prenant en considération que les éléments transversaux pouvant être pris en compte par le ou les capteurs.

Dans un mode particulier de réalisation, les intervalles entre les éléments transversaux sont tous identiques.

Dans une application particulière où la voie de circulation est une voie ferrée, cette configuration reflète la disposition des traverses.

Dans un mode particulier de réalisation, lors de l'étape de placement, on place une pluralité de capteurs séparés par des distances connues supérieures aux intervalles entre les éléments transversaux.

Cela permet de réduire le nombre de capteurs requis, tout en conservant une haute résolution spatiale pour l'image du sous-sol.

Dans un mode particulier de réalisation, la voie de circulation est une voie ferrée, les éléments transversaux étant des traverses de chemin de fer et la pluralité de sources primaires sont des trains ayant au moins une caractéristique géométrique ou une vitesse différente les uns des autres.

Il s'agit donc bien de sources primaires indépendantes et différentes les unes des autres.

Ce positionnement est particulièrement bien adapté à la réception des ondes sismiques provenant des traverses activées par le passage des roues des trains.

Dans un mode particulier de réalisation, l'au moins un capteur comporte au moins un géophone et/ou au moins un accéléromètre et/ou au moins un capteur basé sur l'utilisation de fibres optiques, par exemple de type DAS (capteur acoustique réparti, en anglais « Distributed Acoustic Sensing »).

Dans un mode particulier de réalisation, le procédé comporte en outre, préalablement à l'étape de reconstruction, une étape de prétraitement des ondes sismiques enregistrées.

Cela permet d'obtenir des signaux de qualité optimale, ce qui accroît la fiabilité de l'image du sous-sol obtenue.

Dans un mode particulier de réalisation, l'étape de prétraitement comporte des opérations de normalisation, de débruitage et de filtrage en fréquence.

Dans un mode particulier de réalisation, l'étape de prétraitement comporte une opération de blanchiment spectral.

Ce type d'opérations permet de simplifier les traitements ultérieurs de reconstruction du sismogramme.

Dans un mode particulier de réalisation, le procédé comporte en outre une étape consistant à maximiser le nombre de sources primaires.

Plus on prend en compte de sources primaires, plus la précision de l'image du sous-sol obtenue augmente.

Dans un mode particulier de réalisation, lors de l'étape d'enregistrement, on enregistre des ondes sismiques de surface.

Dans ce mode de réalisation, selon des caractéristiques particulières possibles, lors de l'étape de génération de l'image :
on détermine des courbes de dispersion des ondes de surface dans les signaux reconstruits de l'ensemble de sismogrammes dans une bande de fréquences prédéterminée ;
on réalise une tomographie de la vitesse des signaux reconstruits à partir des courbes de dispersion ; et
on effectue une inversion des vitesses d'ondes de surface des signaux reconstruits, de façon à produire un modèle de vitesse d'ondes S.

Dans un mode particulier de réalisation, lors de l'étape d'enregistrement, on enregistre des ondes sismiques réfractées.

Dans ce mode de réalisation, selon des caractéristiques particulières possibles, lors de l'étape de génération de l'image :
on détermine les temps d'arrivée des signaux reconstruits de l'ensemble de sismogrammes correspondant aux ondes sismiques réfractées ; et
on réalise une tomographie des signaux reconstruits correspondant aux ondes réfractées P à partir des temps d'arrivée, de façon à produire un modèle de vitesse d'ondes P.

Dans le même but que celui indiqué plus haut, la présente invention propose également un dispositif de surveillance du sous-sol terrestre sous une zone cible comportant une voie de circulation, remarquable en ce qu'il comporte des moyens adaptés à mettre en œuvre des étapes d'un procédé tel que succinctement décrit ci-dessus.

Les caractéristiques particulières et les avantages du dispositif étant similaires à ceux du procédé, ils ne sont pas répétés ici.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
[Fig. 1] est une représentation schématique illustrant le principe de l'invention, dans un mode particulier de réalisation où la voie de circulation contenue dans la zone cible, dont le sous-sol est à surveiller, est une voie ferrée.
[Fig. 2] est un organigramme illustrant les principales étapes d'un procédé conforme à la présente invention, dans un mode particulier de réalisation.
[Fig. 3] est une représentation schématique d'un exemple non limitatif de mise en oeuvre de la présente invention dans un mode particulier de réalisation où la voie de circulation contenue dans la zone cible, dont le sous-sol est à surveiller, est une voie ferrée.

### Description de mode(s) de réalisation

L'invention est décrite ici à titre d'exemple nullement limitatif dans une application où la voie de circulation contenue dans la zone cible sous laquelle on souhaite surveiller le sous-sol est une voie ferrée. Néanmoins, l'invention s'applique tout aussi bien à une voie de circulation constituée par une rue, une route ou encore une piste d'un aéroport.

En plaçant des capteurs sismiques, appelés aussi récepteurs, à proximité des voies ferrées, on enregistre les ondes sismiques engendrées par le passage des trains. Un capteur enregistre un signal par train, dans lequel est mélangée la contribution de toutes les « sources » sismiques, c'est-à-dire les traverses de la voie ferrée et les roues du train. Les traverses agissent en effet comme des points sources activés par le passage de chaque roue. Le procédé et le dispositif conformes à la présente invention visent à transformer les signaux de trains mélangeant les ondes sismiques provenant de toutes les traverses, en séparant la contribution de chaque traverse pour tous les trains. Cela permet de reconstruire une collection de signaux sismiques de sources séparées (les traverses) pour un capteur sismique ou récepteur donné.

Autrement dit, on décompose une source complexe et mouvante, constituée par le train, en une somme de sources ponctuelles dont les positions et les temps de déclenchement sont connus.

En effet, on identifie chaque traverse de la voie ferrée comme une source qui est détectée par un capteur sismique et dont le signal est utilisé pour donner une image du sous-sol.

En particulier, en considérant un train comme une source de signaux dite primaire, on analyse le signal source provenant du passage du train et on le décompose en une somme de signaux considérés comme issus de sources dites secondaires, ces signaux des sources secondaires étant émis par chaque roue du train au passage de chaque traverse de la voie ferrée. Les sources secondaires dépendent de la géométrie et de la vitesse du train, ainsi que de la géométrie des traverses. Soit ces informations sont connues, soit elles peuvent être dérivées du signal de la source primaire.

On peut alors mettre en œuvre une méthode de déconvolution multi-canaux et multi-trains pour retrouver la fonction de Green de chaque traverse vers chaque récepteur, c'est-à-dire reconstruire le signal qui aurait été enregistré par chaque capteur si on avait mis indépendamment sur chaque traverse une fonction source impulsionnelle.

On peut ensuite analyser le signal reçu par un capteur pour chaque source secondaire et s'en servir pour l'imagerie du sous-sol.

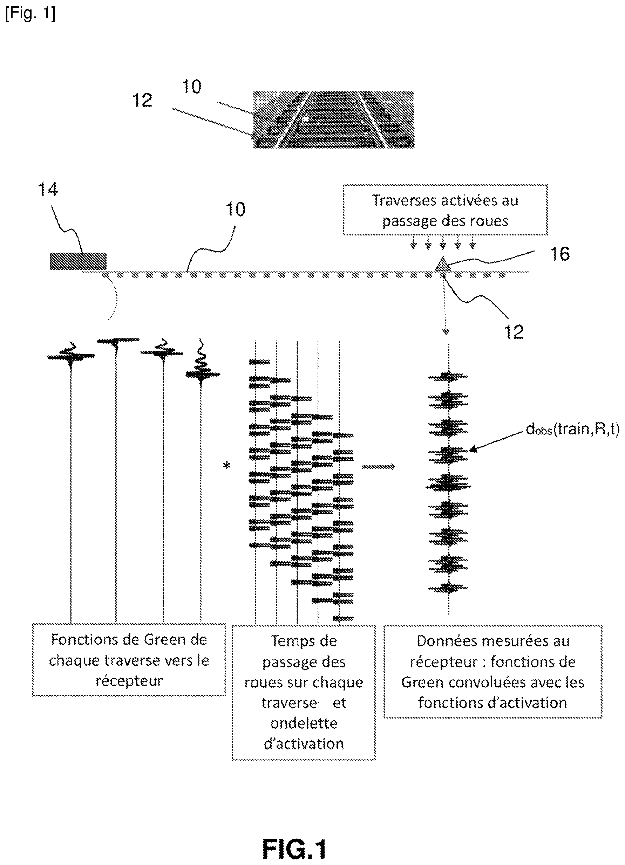

La figure 1 illustre le principe de l'invention, dans un mode particulier de réalisation où la zone cible comporte une voie de circulation qui est une voie ferrée, comportant des rails 10 et des éléments 12 transversaux constitués par des traverses 12 de chemin de fer.

Le signal sismique émis par un train 14 est décomposé comme étant la somme des signaux émis au niveau des traverses 12, chaque traverse 12 étant activée par le passage du train 14 comme une source sismique dite primaire dont le signal va se propager dans le sous-sol. Au lieu d'un train, la source primaire pourrait tout aussi bien être une voiture ou un camion circulant, non pas sur une voie ferrée, mais sur une voie de circulation dotée d'une armure métallique comportant une pluralité d'éléments transversaux par rapport à la circulation et donc comparable à une pluralité de traverses.

Le signal primaire engendré par le train 14 est ainsi la somme des signaux émis par chaque roue du train 14 au passage de chaque traverse 12.

Le signal secondaire émis par une traverse 12 donnée se propage dans le sous-sol et le signal résultant est détecté par un capteur sismique ou récepteur 16.

Comme l'illustre la figure 1, le signal total d_{obs}(train,R,t) enregistré par un capteur 16, R désignant le capteur 16 et t désignant le temps, peut donc s'écrire comme la somme des sources convoluées avec leur fonction de Green, qui représente la propagation de l'onde sismique dans le sous-sol entre la traverse 12 et le récepteur 16 considérés.

On écrit donc :

[Math. 1] ${d}_{obs} \left(train, R, t\right) = {\sum }_{tr ∈ Traverses} {\sum }_{r ∈ roues \left(train\right)} G \left(tr, R, t\right) ∗ F \left(tr, r, t\right)$

Ici, G(tr,R,t) est la fonction de Green dans le domaine temporel pour une source impulsionnelle sur la traverse tr et enregistrée au récepteur R, F(tr,r,t) est la fonction source à la traverse tr activée par la roue r du train et l'opérateur * représente la convolution temporelle.

Les différents éléments ci-dessous sont connus, ou peuvent être déterminés grâce à la redondance d'informations couplée à la diversité des trains :

La fonction source se décompose en :

[Math. 2] $F \left(tr, r, t\right) = A \left(train\right) {F}_{r} \left(t\right) ∗ {F}_{tr} \left(v\left(train\right)\left(t-T\left(tr, t\right)\right)\right)$

Dans l'équation ci-dessus, A(train) est un terme d'amplitude qui dépend du train, Fᵣ(t) est une fonction source dépendant de la roue, qui peut varier de roue en roue, Fₜᵣ(t) est une fonction source dépendant de la traverse, v(train) est la vitesse du train, qui est connue et T(tr,r) représente le temps de passage de la roue r sur la traverse tr et est également connu, car on connaît la géométrie des traverses et la géométrie des roues et on en déduit le temps de passage T(tr,r).

On connaît également l'ondelette source des traverses et l'ondelette source des roues.

Ainsi, après transformation de Fourier, les données enregistrées par le récepteur R, c'est-à-dire le capteur 16, s'écrivent :

[Math. 3] ${\hat{d}}_{obs} \left(train, R, ω\right) = MX$

Dans l'équation ci-dessus, ω désigne la fréquence et M est une matrice constituée d'une ligne et dont le nombre N de colonnes correspond au nombre de traverses considérées. La matrice M s'écrit : [Math. 4] $\begin{matrix}M = \\ C \left(train, ω\right) \left(\hat{{F}_{{tr}_{1}}}\left(ω/v\left(train\right)\right){\sum }_{r} {\hat{F}}_{r} \left(ω\right) {e}^{- iωT \left({tr}_{1}, r\right)} ⋯ \hat{{F}_{{tr}_{N}}}\left(ω/v\left(train\right)\right){\sum }_{r} {\hat{F}}_{r} \left(ω\right) {e}^{- iωT \left({tr}_{N}, r\right)}\right)\end{matrix}$

[Math. 5] $C \left(train, ω\right) = \frac{A \left(train\right)}{v \left(train\right)}$

Le vecteur colonne X ci-dessous contient les fonctions de Green liées aux différentes traverses :

[Math. 6] $X = \left(\begin{matrix}\hat{G} \left({tr}_{1}, R, ω\right) \\ ⋮ \\ \hat{G} \left({tr}_{N}, R, ω\right)\end{matrix}\right)$

Cela correspond aux données mesurées par un capteur 16 lors du passage d'un train 14.

Il est possible d'utiliser la redondance d'information pour en déduire certaines quantités. En particulier, le signal correspondant au passage de différents trains permet d'augmenter le nombre de lignes du système et donc de résoudre l'équation. Dans le mode de réalisation préféré, on utilise au moins autant de trains 14 que de traverses 12 considérées pour chaque capteur 16. De cette façon, on peut retrouver les fonctions de Green de chaque traverse 12 en résolvant, au sens des moindres carrés, le système suivant :

[Math. 7] ${\hat{d}}_{obs} \left(R, ω\right) = MX$

Le membre de gauche de l'équation ci-dessus est un vecteur colonne correspondant aux données observées par un même capteur 16 lors du passage de différents trains et la matrice M a maintenant au moins autant de lignes que de trains observés.

Ce système peut être résolu pour toutes les valeurs de fréquence ω, ce qui permet ensuite de retrouver la variation temporelle des différentes fonctions de Green.

De façon connue en soi, décrite par exemple par L. V. SOCCO, S. FOTI et D. BOIERO en 2010 dans un article intitulé « Surface-wave analysis for building near-surface velocity models - Established approaches and new perspectives », Geophysics 75(5), 75A83-75A102, ces fonctions de Green sont utilisées pour effectuer l'imagerie du sous-sol sous la voie ferrée, avec une résolution donnée par l'espacement entre les traverses 12, qui est par exemple de l'ordre de 70 cm.

Selon le type de capteur 16, le signal peut être utilisé pour une image allant jusqu'à quelques centaines de mètres autour du capteur, si le nombre de trains 14 observés est suffisant.

A titre d'exemple nullement limitatif, on peut disposer un capteur 16 tous les 50 mètres sur la voie ferrée ou à proximité de celle-ci et observer le passage d'une dizaine de trains 14. En variante, on peut procéder à la mesure chaque jour.

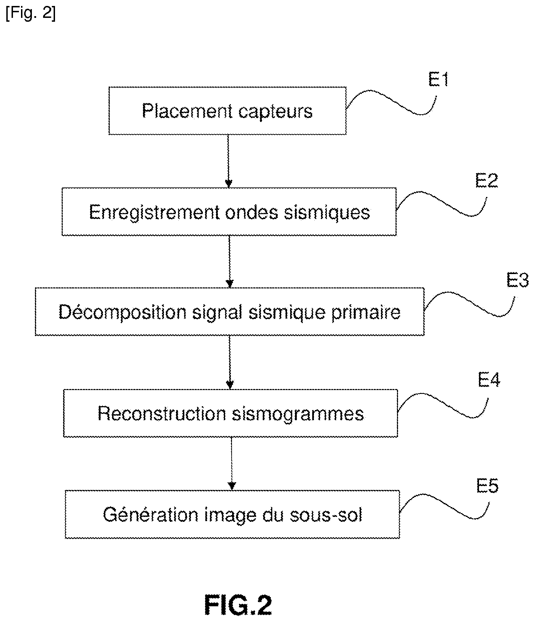

Ainsi, comme le montre l'organigramme de la figure 2, le procédé, conforme à la présente invention, de surveillance du sous-sol terrestre sous une zone cible comportant une voie de circulation, comporte une étape E1 consistant à placer dans la zone cible un ou plusieurs capteurs 16.

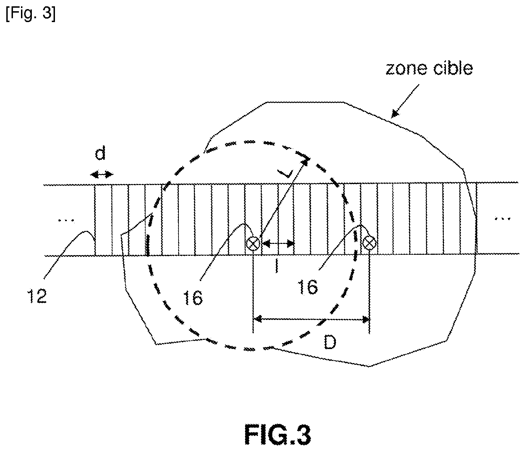

On place le ou les capteurs 16 à proximité de la voie de circulation. La voie de circulation est munie à intervalles connus, notés d (voir figure 3), d'une pluralité d'éléments transversaux par rapport à la voie de circulation. Dans l'exemple nullement limitatif décrit ici où la voie de circulation est une voie ferrée, ces éléments transversaux sont les traverses 12.

Dans cet exemple, les intervalles d entre les éléments transversaux sont identiques, les traverses 12 étant disposées à intervalles réguliers connus.

Lorsqu'il y a plusieurs capteurs 16, on peut par exemple les placer en les séparant par des distances D (voir figure 3) connues supérieures aux intervalles d entre les éléments transversaux.

A titre d'exemple non limitatif, on peut placer le ou les capteurs 16 entre les paires de rails 10 de deux voies ferrées. De façon plus générale, les capteurs 16 peuvent être placés à la surface du sol ou être légèrement enterrés, c'est-à-dire placés à quelques centimètres sous la surface du sol. Ils peuvent être déployés sur ou sous le ballast, ou bien sur ou sous les rails, ou encore dans un tunnel ferroviaire.

Les capteurs 16 peuvent par exemple comporter au moins un géophone et/ou au moins un accéléromètre et/ou au moins un capteur basé sur l'utilisation de fibres optiques, par exemple du type DAS (capteur acoustique réparti, en anglais « Distributed Acoustic Sensing »).

Après l'étape E1, une étape E2 est effectuée, consistant à enregistrer des ondes sismiques.

Ces ondes sismiques proviennent d'un nombre N de sources dites primaires de signal sismique primaire identifiées et mobiles le long de la voie de circulation. Ces sources primaires sont indépendantes et différentes les unes des autres.

Comme décrit plus haut, dans l'exemple décrit ici où la voie de circulation est une voie ferrée, les N sources primaires sont différents trains 14 en mouvement indépendants les uns des autres. En outre, ces trains 14 ont tous au moins une caractéristique liée à leur géométrie (longueur, espacement des bogies, masse, etc.) ou une vitesse différente les uns des autres, ce qui rend ces sources primaires différentes les unes des autres.

Comme décrit également plus haut, les ondes sismiques proviennent de ces sources primaires, dont le déplacement produit du bruit du fait du passage des roues des trains sur les traverses 12. Ces sources de bruit sont connues au sens où elles sont bien identifiées, étant donné qu'on connaît les paramètres cinématiques des trains 14, à savoir, leur position et leur vitesse à chaque instant, ainsi que les paramètres liés à la nature des trains 14 et notamment leur géométrie. Il ne s'agit donc pas d'un bruit ambiant d'origine non identifiée.

L'enregistrement de ces ondes sismiques est réalisé au moyen du ou des capteurs 16.

L'ensemble comportant le ou les capteurs 16, les sources primaires mobiles de signal sismique primaire et un module adapté à réaliser les traitements du procédé de surveillance du sous-sol décrit ici, forme un dispositif de surveillance du sous-sol conforme à l'invention.

De façon optionnelle, l'étape E2 d'enregistrement des ondes sismiques peut être suivie d'une étape comportant un ou plusieurs prétraitements des ondes sismiques enregistrées par le ou les capteurs 16.

Ces prétraitements peuvent être de divers types et peuvent inclure des opérations de normalisation, de débruitage et de filtrage en fréquence.

Dans l'exemple non limitatif décrit ici d'une voie ferrée, lors de l'opération de débruitage des ondes sismiques enregistrées, on enlève le bruit principal environnant du bruit sismique produit par les trains 14. Ce bruit principal environnant est un bruit électrique lié aux caténaires dont on connaît les caractéristiques. On obtient ainsi un signal sismique avec un rapport signal sur bruit amélioré.

Lors de l'opération de filtrage en fréquence, on filtre le signal dans une bande de fréquences prédéterminée qui correspond à la fois à la bande d'émission estimée du train 14 considéré et à la bande de fréquences d'intérêt, laquelle dépend de la profondeur d'intérêt de l'investigation du sous-sol sous la zone cible.

En outre, entre l'opération de débruitage et l'opération de filtrage en fréquence, de façon optionnelle, on peut effectuer une opération de blanchiment spectral.

L'opération de blanchiment spectral, appelé aussi égalisation spectrale, technique connue en soi, consiste à pondérer toutes les composantes fréquentielles du signal de telle façon qu'elles aient toutes la même représentation énergétique.

D'autres types de prétraitements peuvent être appliqués.

Quels qu'ils soient, ces prétraitements sont appliqués avant l'étape E4 de reconstruction décrite plus loin.

A la suite des étapes E1 de placement de capteurs et E2 d'enregistrement d'ondes sismiques, une étape E3 est effectuée, consistant, pour chaque source primaire, à décomposer le signal sismique primaire engendré par cette source primaire en une somme de plusieurs signaux sismiques secondaires engendrés par chacun des éléments transversaux situés dans la zone cible. Cette décomposition est détaillée par la formule mathématique 1 donnée plus haut.

Lors d'une étape additionnelle optionnelle, le nombre de colonnes de la matrice M, qui correspond au nombre d'éléments transversaux considérés, ici les traverses 12, peut être maximisé, de façon à augmenter la précision de l'image du sous-sol obtenue à l'étape E5 décrite plus loin.

La somme de signaux sismiques secondaires peut se limiter aux signaux secondaires engendrés par les éléments transversaux situés à une distance l des capteurs 16 inférieure à 200 m, voire 100 m selon la densité des éléments transversaux. Des exemples nullement limitatifs de distances l et L sont représentés sur la figure 3.

A l'issue des étapes E1 à E3 et des éventuels prétraitements appliqués, une étape E4 est effectuée, qui consiste à reconstruire par déconvolution un ensemble de sismogrammes de la zone cible, où chaque sismogramme correspond à une trace, à partir des signaux sismiques secondaires, comme décrit plus haut en lien avec les formules mathématiques 2 à 7.

A l'issue de l'étape E4 de reconstruction, une étape E5 est effectuée, consistant à engendrer une image du sous-sol sous la zone cible à partir de l'ensemble de sismogrammes reconstruit précédemment.

Lors de cette étape E5 de génération d'une image, les traitements diffèrent selon le type d'ondes sismiques enregistrées à l'étape E2. En effet, on peut enregistrer, soit des ondes de surface, soit des ondes réfractées.

Dans un mode de réalisation où à l'étape E2, on enregistre des ondes sismiques de surface, on effectue les opérations suivantes pour obtenir à l'étape E5 une image du sous-sol sous la zone cible.

On détermine tout d'abord des courbes de dispersion des ondes de surface dans les signaux reconstruits des sismogrammes, dans un bande de fréquences prédéterminée. A titre d'exemple non limitatif, cette bande de fréquences peut être la bande de 1 à 100 Hz.

De façon optionnelle, on peut ensuite sélectionner uniquement les maxima de ces courbes de dispersion.

Puis à partir des courbes de dispersion, on réalise une tomographie de la vitesse des signaux reconstruits.

Enfin, on effectue une inversion des vitesses d'ondes de surface des signaux reconstruits issus des ondes de surface, de façon à produire un modèle de vitesse des ondes de cisaillement, connues de l'homme du métier sous la dénomination d'ondes S. En variante, d'autres méthodes, comme l'inversion de forme d'onde complète, peuvent être appliquées. On peut éventuellement retrouver également la vitesse des ondes de pression, connues de l'homme du métier sous la dénomination d'ondes P, avec d'autres méthodes.

Grâce à la répétition de ces opérations dans le temps, on obtient ainsi une image du sous-sol sous la zone cible qui évolue dans le temps, autrement dit, une représentation à quatre dimensions de cette zone du sous-sol.

Dans un mode de réalisation où, à l'étape E2, on enregistre des ondes sismiques réfractées, on effectue les opérations suivantes pour obtenir à l'étape E5 une image du sous-sol sous la zone cible.

On détermine tout d'abord les temps d'arrivée des signaux reconstruits des sismogrammes, correspondant aux ondes sismiques réfractées.

Puis on réalise une tomographie des signaux reconstruits correspondant aux ondes réfractées P à partir de ces temps d'arrivée, de façon à produire un modèle de vitesse des ondes de pression, dites ondes P. En variante, d'autres méthodes, comme l'inversion de forme d'onde complète, peuvent être appliquées.

De même que dans le mode de réalisation où on enregistre des ondes sismiques de surface, grâce à la répétition de ces opérations dans le temps, on obtient ainsi une image du sous-sol sous la zone cible qui évolue dans le temps, autrement dit, une représentation à quatre dimensions de cette zone du sous-sol.

Il est possible naturellement de cumuler les enregistrements des ondes réfractées avec les ondes de surface, ce qui accroît d'autant la résolution. En particulier, les signaux sont traités indépendamment jusqu'aux pointés, qui sont ensuite combinés, les pointés étant les courbes de dispersion pour les ondes de surface et les temps de première arrivée pour les ondes réfractées.

## Revendications

1. Procédé de surveillance du sous-sol terrestre sous une zone cible comportant une voie de circulation, qui comporte des étapes suivant lesquelles :
on place (E1) dans ladite zone cible au moins un capteur (16) à proximité de ladite voie de circulation, munie à intervalles connus (d) d'une pluralité d'éléments (12) transversaux par rapport à ladite voie de circulation ;
on enregistre (E2) des ondes sismiques provenant d'une pluralité (N) de sources primaires de signal sismique primaire identifiées et mobiles le long de ladite voie de circulation, lesdites sources primaires étant indépendantes et différentes les unes des autres ;
pour chaque source primaire de ladite pluralité (N) de sources primaires, on décompose (E3) le signal sismique primaire engendré par ladite source primaire en une somme de plusieurs signaux sismiques secondaires engendrés par chacun desdits éléments (12) transversaux situés dans ladite zone cible ;
on reconstruit (E4) par déconvolution un ensemble de sismogrammes de ladite zone cible à partir desdits signaux sismiques secondaires ;
on engendre (E5) une image du sous-sol sous ladite zone cible à partir dudit ensemble de sismogrammes.

2. Procédé selon la revendication 1, **caractérisé en ce que** lors de l'étape (E3) de décomposition du signal sismique primaire, ladite somme de signaux sismiques secondaires se limite aux signaux secondaires engendrés par les éléments (12) transversaux situés à une distance (l) dudit au moins un capteur (16) inférieure à 200 m.

3. Procédé selon la revendication 1 ou 2, **caractérisé en ce que** lesdits intervalles (d) entre lesdits éléments (12) transversaux sont tous identiques.

4. Procédé selon la revendication 1, 2 ou 3, **caractérisé en ce que** lors de l'étape (E1) de placement, on place une pluralité de capteurs (16) séparés par des distances (D) connues supérieures auxdits intervalles (d) entre lesdits éléments (12) transversaux.

5. Procédé selon l'une quelconque des revendications précédentes, **caractérisé en ce que** ladite voie de circulation est une voie ferrée, lesdits éléments (12) transversaux étant des traverses de chemin de fer et ladite pluralité (N) de sources primaires sont des trains (14) ayant au moins une caractéristique géométrique ou une vitesse différente les uns des autres.

6. Procédé selon l'une quelconque des revendications précédentes, **caractérisé en ce que** ledit au moins un capteur (16) comporte au moins un géophone et/ou au moins un accéléromètre et/ou au moins un capteur basé sur l'utilisation de fibres optiques.

7. Procédé selon l'une quelconque des revendications précédentes, **caractérisé en ce qu'**il comporte en outre, préalablement à l'étape (E4) de reconstruction, une étape de prétraitement des ondes sismiques enregistrées.

8. Procédé selon la revendication 7, **caractérisé en ce que** l'étape de prétraitement comporte des opérations de normalisation, de débruitage et de filtrage en fréquence.

9. Procédé selon la revendication 7 ou 8, **caractérisé en ce que** l'étape de prétraitement comporte une opération de blanchiment spectral.

10. Procédé selon l'une quelconque des revendications précédentes, **caractérisé en ce qu'**il comporte en outre une étape consistant à maximiser le nombre (N) de sources primaires.

11. Procédé selon l'une quelconque des revendications précédentes, **caractérisé en ce que** lors de l'étape (E2) d'enregistrement, on enregistre des ondes sismiques de surface.

12. Procédé selon la revendication 11, **caractérisé en ce que** lors de l'étape (E5) de génération de ladite image :
on détermine des courbes de dispersion des ondes de surface dans les signaux reconstruits dudit ensemble de sismogrammes dans une bande de fréquences prédéterminée ;
on réalise une tomographie de la vitesse desdits signaux reconstruits à partir desdites courbes de dispersion ; et
on effectue une inversion des vitesses d'ondes de surface desdits signaux reconstruits, de façon à produire un modèle de vitesse d'ondes S.

13. Procédé selon l'une quelconque des revendications précédentes, **caractérisé en ce que** lors de l'étape (E2) d'enregistrement, on enregistre des ondes sismiques réfractées.

14. Procédé selon la revendication 13, **caractérisé en ce que** lors de l'étape (E5) de génération de ladite image :
on détermine les temps d'arrivée des signaux reconstruits dudit ensemble de sismogrammes correspondant auxdites ondes sismiques réfractées ; et
on réalise une tomographie desdits signaux reconstruits correspondant aux ondes réfractées P à partir desdits temps d'arrivée, de façon à produire un modèle de vitesse d'ondes P.

15. Dispositif de surveillance du sous-sol terrestre sous une zone cible comportant une voie de circulation, **caractérisé en ce qu'**il comporte des moyens adaptés à mettre en œuvre des étapes d'un procédé selon l'une quelconque des revendications précédentes.

## Patentansprüche

1. Verfahren zum Überwachen des Erduntergrunds unter einem einen Verkehrsweg umfassenden Zielgebiet, das Schritte umfasst, gemäß denen:
in dem Zielgebiet mindestens ein Sensor (16) in der Nähe des Verkehrswegs angeordnet (E1) wird, der in bekannten Intervallen (d) mit einer Mehrzahl von zu dem Verkehrsweg transversalen Elementen (12) versehen ist;
seismische Wellen, die von einer Mehrzahl (N) von identifizierten und entlang des Verkehrswegs beweglichen primären Quellen eines primären seismischen Signals stammen, aufgezeichnet werden (E2), wobei die primären Quellen voneinander unabhängig und voneinander verschieden sind;
für jede primäre Quelle der Mehrzahl (N) von primären Quellen das von der primären Quelle erzeugte primäre seismische Signal in eine Summe von mehreren sekundären seismischen Signalen (E3), die von jedem der in dem Zielgebiet gelegenen transversalen Elemente (12) erzeugt werden, zerlegt wird;
eine Menge von Seismogrammen des Zielgebiets ausgehend von den sekundären seismischen Signalen durch Dekonvolution rekonstruiert wird (E4);
ein Bild des Untergrunds unter dem Zielgebiet ausgehend von der Menge von Seismogrammen erzeugt wird (E5).

2. Verfahren nach Anspruch 1, **dadurch gekennzeichnet, dass** bei dem Schritt (E3) des Zerlegens des primären seismischen Signals die Summe von sekundären seismischen Signalen sich auf die sekundären Signale beschränkt, die von den in einem Abstand (I) von weniger als 200 m von dem mindestens einen Sensor (16) gelegenen transversalen Elementen (12) erzeugt werden.

3. Verfahren nach Anspruch 1 oder 2, **dadurch gekennzeichnet, dass** die Intervalle (d) zwischen den transversalen Elementen (12) alle identisch sind.

4. Verfahren nach Anspruch 1, 2 oder 3, **dadurch gekennzeichnet, dass** bei dem Schritt (E1) des Anordnens eine Mehrzahl von Sensoren (16) angeordnet wird, die um bekannte Abstände (D) getrennt sind, die größer als die Intervalle (d) zwischen den transversalen Elementen (12) sind.

5. Verfahren nach einem der vorhergehenden Ansprüche, **dadurch gekennzeichnet, dass** der Verkehrsweg ein Schienenstrang ist, wobei die transversalen Elemente (12) Eisenbahnschwellen sind und die Mehrzahl (N) von primären Quellen Züge (14) sind, die sich durch mindestens ein geometrisches Merkmal oder eine Geschwindigkeit voneinander unterscheiden.

6. Verfahren nach einem der vorhergehenden Ansprüche, **dadurch gekennzeichnet, dass** der mindestens eine Sensor (16) mindestens ein Geophon und/oder mindestens einen Beschleunigungsmesser und/oder mindestens einen auf der Verwendung von optischen Fasern beruhenden Sensor umfasst.

7. Verfahren nach einem der vorhergehenden Ansprüche, **dadurch gekennzeichnet, dass** es ferner vor dem Schritt (E4) des Rekonstruierens einen Schritt des Vorverarbeitens der aufgezeichneten seismischen Wellen umfasst.

8. Verfahren nach Anspruch 7, **dadurch gekennzeichnet, dass** der Schritt des Vorverarbeitens Vorgänge zur Normierung, Entrauschung und Frequenzfilterung umfasst.

9. Verfahren nach Anspruch 7 oder 8, **dadurch gekennzeichnet, dass** der Schritt des Vorverarbeitens einen Vorgang zum spektralen Glätten umfasst.

10. Verfahren nach einem der vorhergehenden Ansprüche, **dadurch gekennzeichnet, dass** es ferner einen Schritt umfasst, der darin besteht, die Anzahl (N) von primären Quellen zu maximieren.

11. Verfahren nach einem der vorhergehenden Ansprüche, **dadurch gekennzeichnet, dass** bei dem Schritt (E2) des Aufzeichnens seismische Oberflächenwellen aufgezeichnet werden.

12. Verfahren nach Anspruch 11, **dadurch gekennzeichnet, dass** bei dem Schritt (E5) des Erzeugens des Bildes:
Dispersionskurven der Oberflächenwellen in den rekonstruierten Signalen der Menge von Seismogrammen in einem vorbestimmten Frequenzband bestimmt werden;
eine Tomographie der Geschwindigkeit der ausgehend von den Dispersionskurven rekonstruierten Signale realisiert wird; und
eine Inversion der Oberflächenwellengeschwindigkeiten der rekonstruierten Signale durchgeführt wird, so dass ein S-Wellen-Geschwindigkeitsmodell erstellt wird.

13. Verfahren nach einem der vorhergehenden Ansprüche, **dadurch gekennzeichnet, dass** bei dem Schritt (E2) des Aufzeichnens gebrochene seismische Wellen aufgezeichnet werden.

14. Verfahren nach Anspruch 13, **dadurch gekennzeichnet, dass** bei dem Schritt (E5) des Erzeugens des Bildes:
die Ankunftszeiten der rekonstruierten Signale der Menge von Seismogrammen bestimmt werden, die den gebrochenen seismischen Wellen entsprechen; und
eine Tomographie der den gebrochenen P-Wellen entsprechenden rekonstruierten Signale ausgehend von den Ankunftszeiten realisiert wird, so dass ein P-Wellen-Geschwindigkeitsmodell erstellt wird.

15. Vorrichtung zum Überwachen des Erduntergrunds unter einem einen Verkehrsweg umfassenden Zielgebiet, **dadurch gekennzeichnet, dass** sie Mittel umfasst, die dazu ausgelegt sind, Schritte eines Verfahrens nach einem der vorhergehenden Ansprüche zu durchzuführen.

## Claims

1. Method for monitoring the subsurface of the earth beneath a target area comprising a travel path, which comprises steps according to which:
at least one sensor (16) is placed (E1) in said target area in the vicinity of said travel path, which is provided at known intervals (d) with a plurality of elements (12) which are transverse to said travel path;
seismic waves coming from a plurality (N) of identified primary sources of primary seismic signal which move along said travel path are recorded (E2), said primary sources being independent of and different from one another;
for each primary source of said plurality (N) of primary sources, the primary seismic signal generated by said primary source is decomposed (E3) into a sum of several secondary seismic signals generated by each of said transverse elements (12) which are located in said target area;
a set of seismograms of said target area is reconstructed (E4) by deconvolution on the basis of said secondary seismic signals;
an image of the subsurface beneath said target area is generated (E5) on the basis of said set of seismograms.

2. Method according to Claim 1, **characterized in that**, during the step (E3) of decomposing the primary seismic signal, said sum of secondary seismic signals is limited to the secondary signals generated by the transverse elements (12) located at a distance (I) from said at least one sensor (16) of less than 200 m.

3. Method according to Claim 1 or 2, **characterized in that** said intervals (d) between said transverse elements (12) are all identical.

4. Method according to Claim 1, 2 or 3, **characterized in that**, during the placing step (E1), a plurality of sensors (16) are placed separated by known distances (D) which are greater than said intervals (d) between said transverse elements (12).

5. Method according to any one of the preceding claims, **characterized in that** said travel path is a railway, said transverse elements (12) being railway sleepers and said plurality (N) of primary sources are trains (14) having at least one geometrical characteristic or a velocity which is different from one another.

6. Method according to any one of the preceding claims, **characterized in that** said at least one sensor (16) comprises at least one geophone and/or at least one accelerometer and/or at least one sensor based on the use of optical fibres.

7. Method according to any one of the preceding claims, **characterized in that** it further comprises, prior to the reconstruction step (E4), a step of preprocessing the recorded seismic waves.

8. Method according to Claim 7, **characterized in that** the preprocessing step comprises normalization, noise reduction and frequency filtering operations.

9. Method according to Claim 7 or 8, **characterized in that** the preprocessing step comprises a spectral whitening operation.

10. Method according to any one of the preceding claims, **characterized in that** it further comprises a step consisting in maximizing the number (N) of primary sources.

11. Method according to any one of the preceding claims, **characterized in that**, during the recording step (E2), surface seismic waves are recorded.

12. Method according to Claim 11, **characterized in that**, during the step (E5) of generating said image:
dispersion curves of the surface waves in the reconstructed signals of said set of seismograms in a predetermined frequency band are determined;
a tomography of the velocity of said reconstructed signals is performed on the basis of said dispersion curves; and
the velocities of surface waves of said reconstructed signals are inverted, so as to produce an S-wave velocity model.

13. Method according to any one of the preceding claims, **characterized in that**, during the recording step (E2), refracted seismic waves are recorded.

14. Method according to Claim 13, **characterized in that**, during the step (E5) of generating said image:
the arrival times of the reconstructed signals of said set of seismograms corresponding to said refracted seismic waves are determined; and
a tomography of said reconstructed signals corresponding to the refracted P waves is performed on the basis of said arrival times, so as to produce a P-wave velocity model.

15. Device for monitoring the subsurface of the earth under a target area comprising a travel path, **characterized in that** it comprises means adapted to implement steps of a method according to any one of the preceding claims.
